# EUROPÄISCHE PATENTANMELDUNG

(11) **EP 0 965 471 A2**
(43) Veröffentlichungstag der Anmeldung: **22.12.1999**
(21) Anmeldenummer: 99111691.4
(22) Anmeldetag: 16.06.1999
(51) Int. Cl.: B60J 7/22

(54) **Windabweiser für die Dachöffnung eines Kraftfahrzeugs**

(30) Priorität: 16.06.1998 DE 19826434
(71) Anmelder: Meritor Automotive GmbH, 60314 Frankfurt (DE)
(72) Erfinder: Haagen, Thomas. Dipl. -Ing, 63505 Langenselbold (DE)
(74) Vertreter: Oppermann, Ewald, Dipl.-Ing.

(57) **Zusammenfassung**

Windabweiser (4) für die durch einen verschiebbaren Deckel (3) schließbare Dachöffnung (2) eines Kraftfahrzeugs mit Ausstellung in die Betriebsstellung durch Federkraft. An den Ausstellarmen (7) des Luftleitprofils (6) befindet sich jeweils eine Gelenkhebelanordnung (15), auf welche die Federkraft einwirkt und welche den Windabweiser (4) am Dachrahmen (9) abstützt, wodurch einerseits die bei der Deckelschließverschiebung zu überwindende Ausstellkraft herabgesetzt wird und andererseits für den Windabweiser (4) in der Betriebsstellung ein schwingungsarmer Stand erreicht wird.

## Beschreibung

Die Erfindung bezieht sich auf einen Windabweiser für die Dachöffnung eines Kraftfahrzeugs, der entsprechend dem Oberbegriff des Patentanspruchs 1 ausgebildet und angeordnet ist.

Derartige Windabweiser sind in unterschiedlichen Ausführungen bekannt, die sich in zwei Gruppen einteilen lassen. Die Windabweiser der einen Gruppe (z.B. DE 26 07 816 C3, DE 35 17 067 C2, DE 39 06 903 A1, DE 44 09 484 C1) weisen die Gemeinsamkeit auf, daß die Federkraft von Schenkelfedern erzeugt wird, die mit einem Schenkel unmittelbar an das Luftleitprofil angreifen und sich mit dem anderen Schenkel an einem dachfesten Teil abstützen. Bei den Windabweisern der anderen Gruppe (z.B. DE 43 23 694 C1, DE 44 46 016 C1) wird die Federkraft von Blattfedern erzeugt, die an die Ausstellarme angreifen und sich am Dachrahmen abstützen.

Bei den bekannten Windabweiserkonstruktionen regt die im Fahrbetrieb auf den ausgestellten Windabweiser einwirkende Windkraft diesen zu Schwingungen entgegen der Federkraft an. Dieses kann zu störenden Windabweiserbewegungen und unerwünschter Geräuschbildung führen. Darüber hinaus können große Federkräfte, welche an sich den geschilderten Schwingungen entgegenwirken, zu Fehlfunktionen bei Schließverschiebungen des Deckels führen, bei denen mit dem Deckel bewegte Elemente auf die Ausstellarme auflaufen, um diese in Richtung der unteren Endlage zu verschwenken. Hierbei können große Federkräfte unzulässig große Schließkräfte erforderlich machen.

Der Erfindung liegt die Aufgabe zugrunde, einen Windabweiser bereitzustellen, der in seiner ausgestellten Betriebsstellung nicht entgegen der Federkraft schwingen kann und der keine unzulässig hohen Schließkräfte erfordert.

Die gestellte Aufgabe wird durch die Merkmale des Patentanspruchs 1 gelöst. Vorteilhafte Weiterbildungen des Windabweisers gehen aus den unteransprüchen hervor und sind nachfolgend ebenfalls näher beschrieben.

Durch die angegebene Gelenkhebelanordnung in Verbindung mit dem Anbringungsort und dem Kraftangriff der Schraubendrehfeder einerseits an die Gelenkhebelanordnung und andererseits an den Ausstellarm wird erfindungsgemäß erreicht, daß der Windabweiser in seiner durch die Federkraft herbeigeführten ausgestellten Betriebsstellung einen schwingungssicheren Stand hat, wobei er sich über die Gelenkhebelanordnung am Dachrahmen abstützt. Bei der Schließverschiebung des Deckels sind für die Absenkung des Windabweisers in seine Ruhestellung die beiderseits angebrachten Glenkhebelanordnungen gegen die Federkraft in eine Strecklage zu bringen, wozu vergleichsweise geringe Kräfte erforderlich sind, so daß die Deckelschließkräfte keine unzulässig hohen Schließkraftwerte annehmen können.

Die im Patentanspruch 2 angegebenen Merkmale sorgen dafür, daß die Gelenkhebelanordnung bei der Schließverschiebung durch das auf den längeren Hebel einwirkende mit dem Deckel verschiebbare Element anfänglich eine Hebelverlagerung gegen die Federkraft in Richtung der Strecklage der Gelenkhebelanordnung erfährt, bevor das mit dem Deckel verschiebbare Element unmittelbar auf den Ausstellarm einwirkt.

Mit den im Patentanspruch 3 angegebenen Merkmalen erhält die Gelenkhebelanordnung in der Betriebsstellung des Windabweisers eine besonders stabile Konfiguration, in welcher der kürzere Hebel etwa senkrecht zum Dachrahmen gerichtet ist.

Weitere Einzelheiten der Erfindung werden anhand der ein bevorzugtes Ausführungsbeispiel darstellenden Zeichnungen nachfolgend näher erläutert. In den Zeichnungen zeigt:
- Fig. 1: die abgebrochen und aufgebrochen gezeichnete Draufsicht auf ein Kraftfahrzeugdach bei geschlossenem Deckel und in Ruhestellung befindlichem Windabweiser,
- Fig. 2: den abgebrochenen Längsschnitt durch das Kraft fahrzeugdach entsprechend der Linie II-II in Fig. 1,
- Fig. 3: einen der Fig. 2 ähnlichen abgebrochenen Längs schnitt durch das Kraftfahrzeugdach, jedoch mit einem vorderen Öffnungsspalt zwischen Deckel und Fahrzeugdach und einer entsprechenden Zwischenstellung des Windabweisers,
- Fig. 4: einen den Figuren 2 und 3 ähnlichen abgebroche nen Längsschnitt durch das Kraftfahrzeugdach, jedoch mit in seine Betriebsstellung ausgestelltem Windabweiser und einer Schiebestellung des Deckels, die dieser unmittelbar vor dem Beginn der Einschwenkbewegung des Windabweisers einnimmt,
- Fig. 5: den Schnitt durch die Gelenkhebelanordnung ent sprechend der Linie V-V in Fig. 4 und
- Fig. 6: eine abgebrochene Einzelheit der Gelenkhebel anordnung in Seitenansicht entsprechend dem Ausschnittskreis VI in Fig. 4.

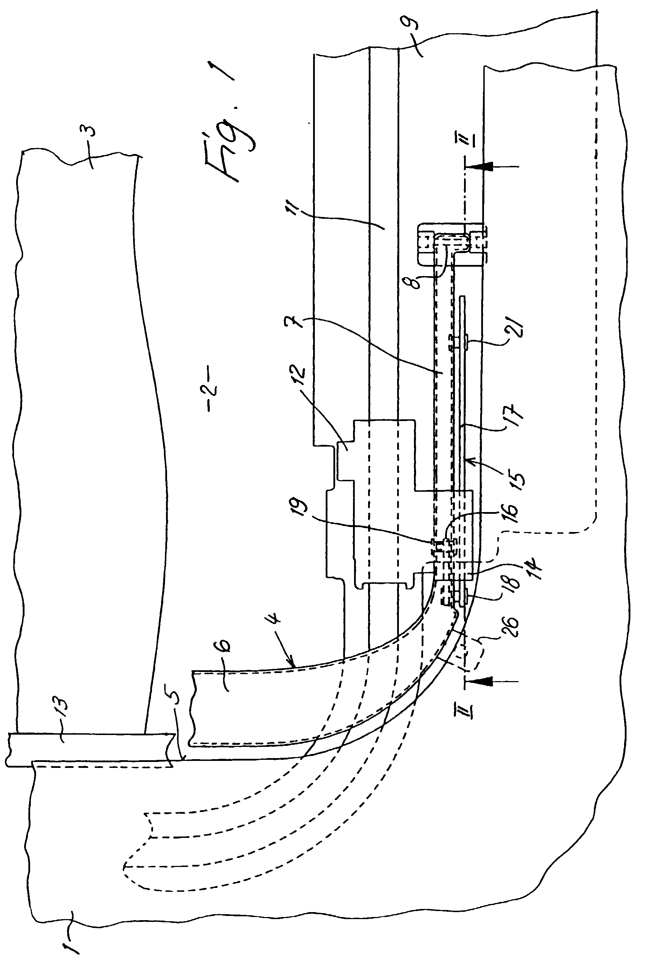

Aus den Figuren 1 bis 4 sind u.a. ein festes Fahrzeugdach 1, eine darin angebrachte Dachöffnung 2, ein der Dachöffnung zugeordneter verschiebbarer oder verschiebbarer und ausstellbarer Deckel 3, im Ausführungsbeispiel als Glasdeckel ausgebildet, und ein allgemein mit der Bezugszahl 4 bezeichneter Windabweiser ersichtlich. Im Bereich der Vorderkante 5 und parallel dazu befindet sich ein langgestrecktes Luftleitprofil 6 des Windabweisers 4. An beiden Enden des Luftleitprofils 6 ist jeweils ein Ausstellarm 7 fest angebracht. Die beiden Ausstellarme 7, von denen aus Fig. 1 wegen der Spiegelbildlichkeit der Anordnung nur einer ersichtlich ist, verlaufen parallel zueinander und sind zu beiden Seiten der Dachöffnung 2 angeordnet.

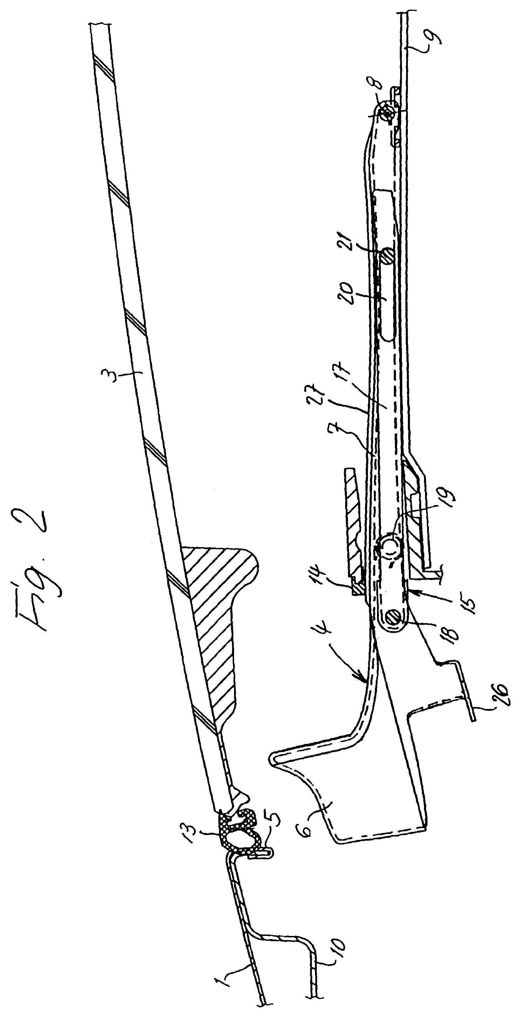

Die Ausstellarme 7 sind an ihren hinteren, dem Luftleitprofil 6 abgelegenen Enden um eine zur Vorderkante 5 der Dachöffnung 2 parallel verlaufende Achse, die durch Schwenkbolzen 8 gebildet ist, schwenkbar angeordnet. Die Ausstellarme 7 sind mittels der Schwenkbolzen 8 an einen die Dachöffnung 2 unterfangenden Dachrahmen 9 angelenkt, der in den Figuren 1 bis 4 nur abgebrochen angedeutet ist und über Dachverstärkungsprofile 10, von denen in den Figuren 2 bis 4 nur das vordere abgebrochen dargestellt ist, fest mit dem Fahrzeugdach 1 verbunden.

Der Deckel 3 ist in üblicher Weise mit paarweise angeordneten vorderen und hinteren Gleitschuhen verschiebbar an seitlichen am Dachrahmen 9 angebrachten Führungsschienen 11 geführt. Aus Fig. 1 ist nur eine der beiden seitlichen Führungsschienen 11 und nur ein vorderer Gleitschuh 12 ersichtlich. Eine nähere Erläuterung dieser Funktionsteile und des zugehörigen Antriebssystems für den Deckel 3 ist entbehrlich, weil es sich hierbei um einschlägig bekannte Anordnungen handelt, auf die sich die vorliegende Erfindung nicht bezieht.

Der Deckel 3 kann auch aus Metallblech geformt sein. Die Abdichtung des geschlossenen Deckels (Fig. 1, 2) übernimmt ein am Deckel 3 befestigtes Randspaltabdichtungsprofil 13. An den vorderen Gleitschuhen 12 befindet sich jeweils ein Mitnehmer 14, der mit dem Gleitschuh 12 an allen Verschiebebewegungen des Deckels 3 teilnimmt und auf noch zu beschreibende Weise mit dem Windabweiser 4 zusammenwirkt.

Am Windabweiser 4 ist an beiden Ausstellarmen 7 spiegelbildlich übereinstimmend eine Gelenkhebelanordnung 15 auf die nachstehend näher beschriebene Weise angebracht. Die Gelenkhebelanordnung 15 ist aus einem kürzeren Hebel 16 und einem längeren Hebel 17 gebildet. Beide Hebel 16, 17 sind an jeweils einem ihrer Enden gelenkig über einen Gelenkbolzen 18 miteinander verbunden. Das andere Ende des kürzeren Hebels 16 ist mit dem zugehörigen Ausstellarm 7 in der Nähe des Luftleitprofils 6 über einen weiteren Gelenkbolzen 19 gelenkig verbunden. Am anderen Ende des längeren Hebels 17 befindet sich ein parallel zur Hebellängsrichtung verlaufender Führungsschlitz 20, in welchen ein in der Nähe des Schwenkbolzens 8 am Ausstellarm 7 befestigter Führungsstift 21 eingreift. Führungsschlitz 20 und Führungsstift 21 bilden ein Schubgelenk.

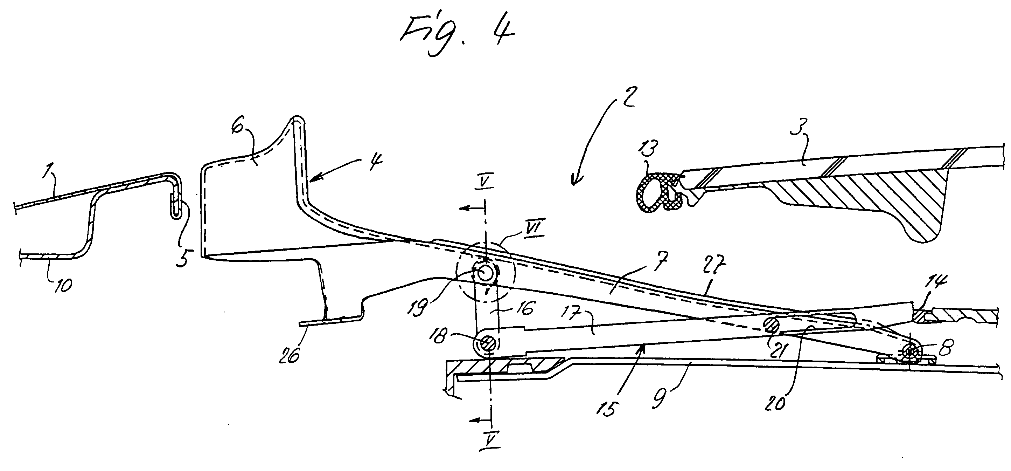

In Fig. 4 ist die Gelenkhebelanordnung 15 in ihrer maximal aufgerichteten Lage dargestellt, welche der Betriebsstellung des Luftleitprofils 6 entspricht und in welcher sie sich mit ihrer zwischen den beiden Hebeln 16, 17 befindlichen Gelenkstelle am Dachrahmen 9 abstützt. Hierbei befindet sich der kürzere Hebel 16 in einer stabilen zum Dachrahmen 9 etwa senkrechten Stellung, während sich der Führungsstift 21 an dem Ende des Führungsschlitzes 20 befindet, das dem Gelenkbolzen 18 näher liegt. Diese in Fig. 4 dargestellte Stellung der Gelenkhebelanordnung 15 wird durch Federkraft aufrechterhalten, welche damit dafür sorgt, daß der Windabweiser 4 in seiner ausgestellten Betriebsstellung verbleibt.

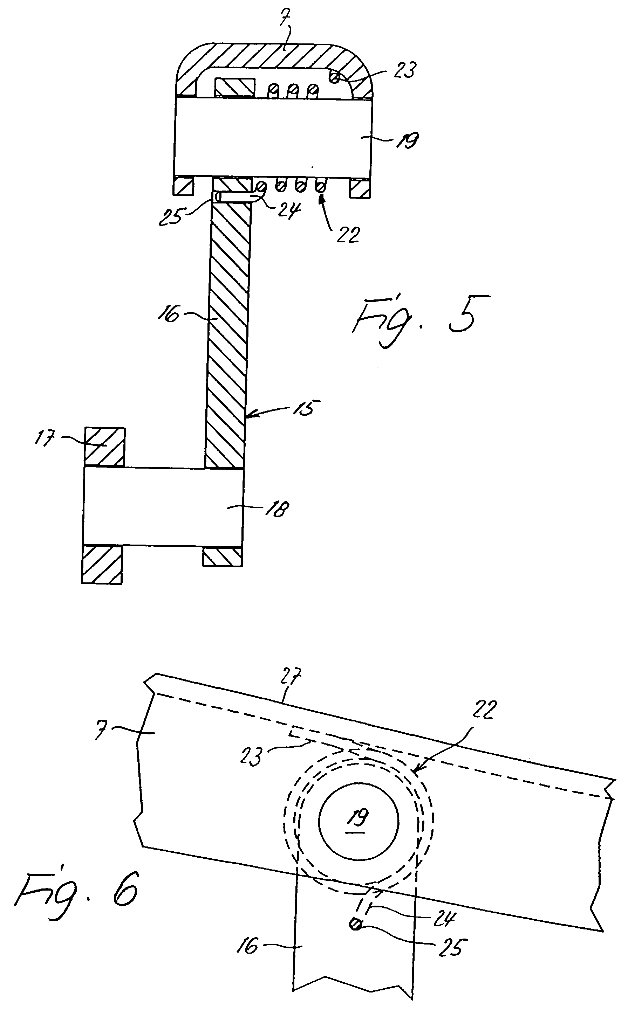

Die Federkraft wird von einer Schraubendrehfeder 22 erzeugt, die an der Gelenkverbindungsstelle zwischen dem kürzeren Hebel 16 und dem Ausstellarm 7 um den Gelenkbolzen 19 herum angeordnet ist. Wie mit größter Deutlichkeit aus den Figuren 5 und 6 hervorgeht, stützt sich ein Schenkel 23 der Schraubendrehfeder 22 am Ausstellarm 7 ab, während der andere Schenkel 24 am kürzeren Hebel 16 abgestützt ist, indem er in eine Aufnahmebohrung 25 eingreift. Die Schraubendrehfeder 22 ist so ausgebildet und angeordnet, daß beim Verschieben des Deckels 3 in Richtung seiner Öffnungsstellung die Gelenkhebelanordnung 15 das Luftleitprofil 6 in seine Betriebsstellung ausstellt. In der Betriebsstellung liegt der Windabweiser 4 mit beidseitig an ihm befestigten Anschlägen 26 dem festen Fahrzeugdach 1 von unten an (Fig. 1). In der Betriebsstellung des Windabweisers befindet sich die Schraubendrehfeder 22 noch unter Vorspannung, wodurch die Betriebsstellung stabilisiert wird.

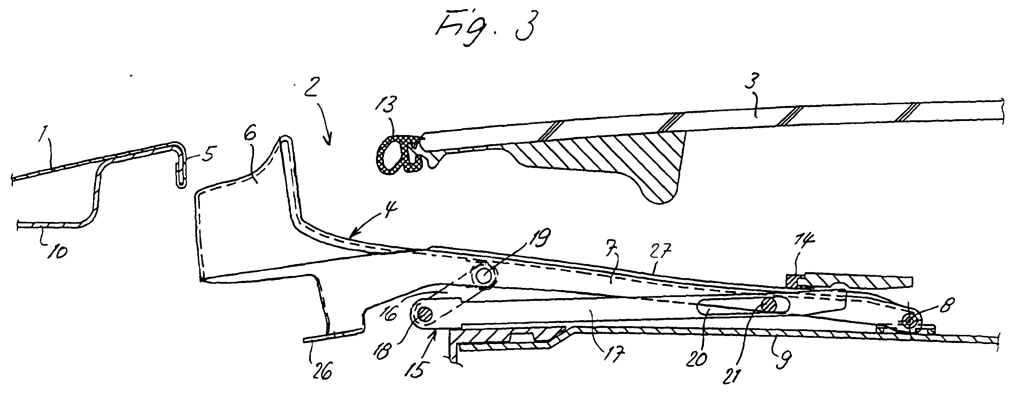

Wird der Deckel 3 in Schließrichtung bewegt, trifft der Mitnehmer 14 schließlich auf das äußere Ende des längeren Hebels 17 der Gelenkhebelanordnung 15. Diese Situation ist in Fig. 4 dargestellt. Bei fortgesetzter Schließverschiebung des Deckels 3 wird infolge der Anlage des Mitnehmers 14 an das äußere Ende des längeren Hebels 17 dieser gegen die Federkraft der Schraubendrehfeder 22 unter Absenkung des Luftleitprofils verlagert. Dabei verschwenken der Ausstellarm 7 um seinen Schwenkbolzen 8 und der längere Hebel 17 um den Gelenkbolzen 18, wobei sich der Führungsschlitz 20 relativ zum Führungsstift 21 verlagert. Auf diese Weise wird allmählich bei Fortsetzung der Schließverschiebebewegung des Deckels 3 die Anlagefläche zwischen dem parallel zur Führungsschiene 11 bewegten Mitnehmer 14 und dem hinteren oder äußeren Ende des längeren Hebels 17 verkleinert und schließlich aufgehoben. Zu diesem Zeitpunkt läuft der Mitnehmer 14 auf eine am Ausstellarm 7 befindliche Gleitbahn 27 auf, wodurch bei fortgesetzter Schließverschiebebewegung des Deckels 3 der Mitnehmer 14 unmittelbar auf den Ausstellarm 7 einwirkt, so daß dieser um den Schwenkbolzen 8 weiter nach unten verschwenkt. Eine Zwischenphase dieser Verschiebe- bzw. Verschwenksituation ist in Fig. 3 dargestellt.

Wenn der Deckel 3 seine in Fig. 2 gezeigte Schließstellung erreicht hat, befindet sich der Mitnehmer 14 am vorderen Ende der Gleitbahn 27, wodurch der Windabweiser 4 gegen die Kraft der Schraubendrehfeder 22 in seine Ruhestellung verschwenkt ist. Hierbei befindet sich das Luftleitprofil 6 unterhalb des Deckels 3. Bei der Öffnungsverschiebung des Deckels 3 erfolgen die geschilderten Bewegungsvorgänge in umgekehrter Reihenfolge. Der sich zusammen mit dem Deckel 3 nach hinten verschiebende Mitnehmer 14 gleitet auf der Gleitbahn 27 und nähert sich dabei zunehmend dem Schwenkbolzen 8, wodurch die Gelenkhebelanordnung 15 nach und nach freigegeben wird und sich durch die Federkraft der Schraubendrehfeder 22 aufrichtet, bis schließlich wieder die in Fig. 4 gezeigte Lage der Teile erreicht ist.

Die Gelenkhebelanordnung 15 nimmt in der in Fig. 4 gezeigten Betriebsstellung mit dem Ausstellarm 7 etwa die Form eines rechtwinkligen Dreiecks ein, wobei der zwischen den beiden Hebeln 16 und 17 befindliche Winkel etwa 90° beträgt.

Mit der Erfindung wird ein Windabweiser für die durch einen verschiebbaren Deckel schließbare Dachöffnung eines Kraftfahrzeugs vorgeschlagen, bei dem die Ausstellung in die Betriebsstellung durch Federkraft erfolgt. An den Ausstellarmen des Luftleitprofils des Windabweisers befindet sich jeweils eine Gelenkhebelanordnung, auf welche die Federkraft einwirkt und welche den Windabweiser am Dachrahmen abstützt, wodurch einerseits die bei der Deckelschließverschiebung zu überwindende Ausstellkraft herabgesetzt wird und andererseits für den Windabweiser in der Betriebsstellung ein schwingungsfreier Stand erreicht wird.

## Patentansprüche

1. Windabweiser (4) für die Dachöffnung (2) eines Kraftfahrzeugs, der ein verschiebbarer Deckel (3) zum wahlweisen Verschließen oder mindestens teilweisen Freigeben derselben zugeordnet ist, mit einem im Bereich der Vorderkante (5) der Dachöffnung (2) parallel zur Vorderkante (5) angeordneten, langgestreckten Luftleitprofil (6), das durch Federkraft aus einer Ruhestellung in eine Betriebsstellung ausstellbar ist und damit verbundene, zu beiden Seiten der Dachöffnung (2) angeordnete Ausstellarme (7) aufweist, die an ihren hinteren, dem Luftleitprofil (6) abgelegenen Enden um eine zur Vorderkante (5) der Dachöffnung (2) parallel verlaufende Achse (Schwenkbolzen 8) schwenkbar an einem die Dachöffnung (2) unterfangenden Dachrahmen (9) angelenkt sind und durch Verschieben des Deckels (3) in seine Schließstellung gegen die Federkraft in eine untere Endlage schwenkbar sind, in der sie das Luftleitprofil (6) in dessen Ruhestellung absenken**, dadurch gekennzeichnet**, daß die Ausstellarme (7) in der Betriebsstellung des Luftleitprofils (6) jeweils durch eine Gelenkhebelanordnung (15) an dem Dachrahmen (9) abgestützt sind, die aus einem kürzeren Hebel (16) und einem längeren Hebel (17) gebildet ist, daß die beiden Hebel (16, 17) an jeweils einem ihrer Enden gelenkig miteinander verbunden sind, daß das andere Ende des kürzeren Hebels (16) mit dem zugehörigen Ausstellarm (7) in der Nähe des Luftleitprofils (6) gelenkig verbunden ist, daß sich am anderen Ende des längeren Hebels (17) ein Führungsschlitz (20) befindet, in welchen ein in der Nähe der Schwenkachse (Schwenkbolzen 8) des Ausstellarms (7) am Ausstellarm befestigter Führungsstift (21) eingreift, und daß die Federkraft von einer Schraubendrehfeder (22) erzeugt wird, die an der Gelenkverbindungsstelle (Gelenkbolzen 19) zwischen dem kürzeren Hebel (16) und dem Ausstellarm (7) angeordnet ist und deren einer Schenkel (23) sich am Ausstellarm (7) und deren anderer Schenkel (24) sich am kürzeren Hebel (16) derart abstützt, daß beim Verschieben des Deckels (3) in Richtung seiner Öffnungsstellung die Gelenkhebelanordnung (15) das Luftleitprofil (6) in seine Betriebsstellung aussteht.

2. Windabweiser nach Anspruch 1, **dadurch gekennzeichnet**, daß beim Verschieben des Deckels (3) in Richtung seiner Schließstellung der längere Hebel (17) anfänglich durch ein mit dem Deckel (3) verschiebbares Element (Mitnehmer 14) gegen die Federkraft der Schraubendrehfeder (22) unter Absenken des Luftleitprofils (6) verlagerbar ist, bevor das mit dem Deckel (3) verschiebbare Element unter Fortsetzung der Verschiebung des Deckels in seine Schließstellung und unter Freigabe des längeren Hebels (17) auf eine Gleitbahn (27) des Ausstellarms (7) aufgelaufen ist.

3. Windabweiser nach Anspruch 1 oder 2, **dadurch gekennzeichnet**, daß die Gelenkhebelanordnung (15) in der Betriebsstellung mit dem Ausstellarm (7) etwa die Form eines rechtwinkligen Dreiecks einnimmt, wobei der zwischen den beiden Hebeln (16, 17) befindliche Winkel etwa 90° beträgt.
